# EUROPÄISCHE PATENTSCHRIFT

(11) **EP 3 610 173 B1**
(45) Veröffentlichungstag und Bekanntmachung des Hinweises auf die Patenterteilung: **12.02.2025**
(21) Anmeldenummer: 18719077.2
(22) Anmeldetag: 09.04.2018
(51) Int. Cl.: F16G 13/06

(54) **GELENKKETTE**
ARTICULATED CHAIN
CHAÎNE ARTICULÉE

(30) Priorität: 11.04.2017 DE 102017107870
(43) Veröffentlichungstag der Anmeldung: 19.02.2020
(73) Patentinhaber: KettenWulf Betriebs GmbH, 59889 Eslohe-Kückelheim (DE)
(72) Erfinder: HEBBECKER, Thomas, 57399 Kirchhundem (DE); WULF, Tobias, 59889 Eslohe (DE)
(74) Vertreter: Basfeld, Rainer
(86) Internationale Anmeldenummer: PCT/EP2018/059046
(87) Internationale Veröffentlichungsnummer: WO 2018/189118

(56) Entgegenhaltungen:
- EP-A1- 0 886 082
- WO-A1-2005/043005
- CN-Y- 2 546 688
- DE-A1- 102007 009 821
- DE-A1- 19 918 703
- DE-U1- 202012 104 764
- DE-U1- 202014 105 286
- JP-A- 2006 064 049
- JP-A- 2008 164 043
- JP-A- 2016 075 391
- US-A- 5 322 483
- US-B1- 7 325 391
- THIELE GMBH -: "Thiele: Becherwerksketten", 7 November 2016 (2016-11-07), pages 1 - 20, XP093015435, Retrieved from the Internet <URL:https://www.thiele.de/fileadmin/user_upload/produkte/infoDownloads/THIELE_KATALOG_Becherwerksketten_DE.pdf> [retrieved on 20230118]

## Beschreibung

Die vorliegende Erfindung betrifft eine Gelenkkette gemäß dem Oberbegriff des Anspruchs 1.

Eine Gelenkkette, insbesondere eine Buchsenkette, ist im Wesentlichen aus zwei endlos aneinander gereihten Elementen aufgebaut. Diese Elemente werden auch als Innen- und Außenglied bezeichnet. Ein Außenglied besteht in der Regel aus zwei Außenlaschen, welche durch zwei Bolzen fest miteinander verbunden sind. Ein Innenglied setzt sich in der Regel aus zwei Innenlaschen und zwei Buchsen zusammen, welche mit den Bolzen der benachbarten Außenglieder je ein Kettengelenk bilden. Diese Gelenke ermöglichen der Gelenkkette beispielsweise ein Umschlingen der im Antriebsstrang befindlichen Kettenräder.

Ein wesentliches Einsatzkriterium einer Gelenkkette ist deren übertragbare Zugkraft. Grundsätzlich kann beispielsweise durch Materialauswahl, Wärmebehandlung und Materialstärke der einzelnen Gelenkkettenkomponenten eine entsprechende übertragbare Zugkraft erreicht werden. Der Materialauswahl bzw. Dimensionierung sind jedoch Grenzen gesetzt, beispielsweise durch den zur Verfügung stehenden Bauraum und letztendlich auch die vertretbaren Kosten für eine Gelenkkette.

Eine Gelenkkette gemäß dem Oberbegriff des Anspruchs 1 ist aus der JP 2008 164043 A bekannt. Die darin beschriebene Gelenkkette weist abwechselnd angeordnete Innenlaschen und Außenlaschen sowie diese miteinander verbindende Kettengelenke auf, die jeweils durch eine Buchse und einen Bolzen gebildet werden. In den einander gegenüberliegenden Bereichen der Innenlaschen und der Außenlaschen ist jeweils eine umlaufende Nut vorgesehen, wobei jeweils eine Nut in einer Innenlasche und eine dieser direkt gegenüberliegende Nut in einer Außenlasche einen Aufnahmeraum für einen Dichtring bilden. Der Dichtring ist in diesen Aufnahmeraum lose eingepasst.

Eine Gelenkkette gemäß dem Oberbegriff des Anspruchs 6 ist aus der WO 2005/043005 A1 bekannt. Die darin beschriebene Gelenkkette ist als Fahrradkette ausgebildet. Die Gelenkkette weist abwechselnd angeordnete Innenlaschen und Außenlaschen sowie diese miteinander verbindende Kettengelenke auf, die jeweils durch eine Buchse und einen Bolzen gebildet werden. Auf den Innenseiten der Außenlaschen ist etwa mittig eine nach innen ragende Verdickung angeordnet. Diese Verdickung soll ein Verdrehen der als Fahrradkette ausgebildeten Gelenkkette beim Schaltvorgang verhindern.

Eine weitere Gelenkkette ist aus der US 5 322 483 A bekannt. Die darin beschriebene Gelenkkette ist ebenfalls als Fahrradkette ausgebildet. Die Gelenkkette weist abwechselnd angeordnete Innenlaschen und Außenlaschen sowie diese miteinander verbindende Kettengelenke auf, die jeweils durch einen Bolzen gebildet werden. Die US 5 322 483 A offenbart eine Außenlasche mit einem etwa mittig angeordneten Loch, dessen Ränder verdünnt sind und nach innen ragen. Durch das Loch kann Schmiermittel in das Innere der Kette eingebracht werden.

Eine weitere Gelenkkette ist aus der JP 2016 075391 A bekannt. Die darin beschriebene Gelenkkette ist als Rotary-Kette beziehungsweise Kette mit gekröpften Laschen ausgebildet.

Die CN 2546688Y offenbart eine Gelenkkette mit einer flachen ringförmigen Nut, in welche ein ringförmiger Vorsprung eingreift, um einen Eintritt von Schmutz in das Kettengelenk zu verhindern.

Die vorliegende Erfindung macht es sich zur Aufgabe, eine verbesserte Gelenkkette der eingangs genannten Art vorzuschlagen, insbesondere eine Gelenkkette vorzuschlagen, die eine höhere Zugkraft und/oder eine verbesserte dynamische Belastbarkeit bei ansonsten gleicher oder ähnlicher Dimensionierung, insbesondere gleichem Gewicht, übertragen kann.

Erfindungsgemäß wird diese Aufgabe durch eine Gelenkkette der eingangs genannten Art mit den kennzeichnenden Merkmalen des Anspruchs 1 gelöst.

Gemäß Anspruch 1 ist vorgesehen, dass zwischen der Außenlasche und der Innenlasche eine Labyrinthdichtung vorgesehen ist, die mindestens eine Nase und mindestens eine Nut umfasst, wobei die mindestens eine Nase und die mindestens eine Nut in einer Länge oder Tiefe zwischen 10% bis 50% der durchschnittlichen jeweiligen Laschenstärke ausgeführt sind, vorzugsweise in einem Bereich von 20% bis 40% der jeweiligen durchschnittlichen Laschenstärke, wobei die Labyrinthdichtung so ausgebildet ist, dass bei einer Überlastung der Gelenkkette der Kraftfluss innerhalb der Gelenkkette teilweise über die von der mindestens einen Nase und der mindestens einen Nut gebildeten Labyrinthflächen umgeleitet wird, wobei die mindestens eine Nut in der Innenlasche ausgebildet ist und die mindestens eine Nase an der Außenlasche ausgebildet ist oder wobei die mindestens eine Nut in der Außenlasche ausgebildet ist und die mindestens eine Nase an der Innenlasche ausgebildet ist. Es ist vorgesehen, dass die Außenlasche einen zur Kettenmitte versetzten Abschnitt aufweist, wobei der versetzte Abschnitt in einem mittigen Bereich der Außenlasche zwischen den Kettengelenken angeordnet ist. Durch diese Maßnahme sind die mindestens eine Nase und Nut der Labyrinthdichtung an den Laschen derart ausgeführt, dass sich eine ausreichende, vorzugsweise maximal mögliche, Überdeckung in Kettenzugrichtung ergibt, die wiederum dafür Sorge tragen kann, dass die Labyrinthdichtung als solches zur Übertragung von entsprechenden Zugkräften eingerichtet sein kann.

Das Eindringen von Verschmutzungen in den Gelenkbereich einer Kette kann durch Labyrinthe verzögert werden. Diese Labyrinthe können in Form von zusätzlichen Bauteilen, wie beispielsweise ein Lamellendichtring, oder besonders ausgeführte Laschen, wie beispielsweise Nuten und Nasen im Bereich der Teilungslöcher, in Kombination mit überstehenden Buchsen realisiert werden. Der Luftspalt innerhalb dieser Labyrinthe ist unter Berücksichtigung des Gelenkspiels sowie auftretendem Verschleiß der Kettenbauteile einzustellen.

Wird nun eine Überlastung der Kette erzeugt, bei der also die Kettenzugkraft groß gegenüber der Betriebskraft ist, werden sich die Laschen im Querschnittsbereich der Bohrungen längen. Sobald diese Längung den Luftspalt zwischen den Labyrinthflächen überschreitet, wird der Kraftfluss innerhalb der Kette teilweise über die Labyrinthflächen umgeleitet. Dies führt zu einer geringeren Belastung der bereits verformten Bauteilbereiche (Bolzen, Buchse, Kopfbereiche der Innen- und Außenlaschen). Auf diese Weise kann die Bruchkraft einer Kette optimiert werden. Die Abstimmung der Luftspalte innerhalb der Labyrinthe ist hierbei vorzugsweise unter Berücksichtigung der Verformungsfähigkeiten der verwendeten Werkstoffe anzupassen. Durch die Verwendung von hochfesten und gleichzeitig verformungsfähigen Werkstoffen, wie beispielsweise 42CrMo4, können die Kraftübertragungsmöglichkeiten der Labyrinthe maximal genutzt werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass die Breite der mindestens einen Nase und/oder Nut in einer Stärke ausgeführt ist, die im Bereich von 80% bis 120% der Nasenlänge beziehungsweise Nuttiefe ist.

In einer weiteren vorteilhaften Ausgestaltung der Erfindung kann vorgesehen sein, dass die Ecken und Kanten der mindestens einen Nase und/oder Nut jeweils mit identischen Radien oder Fasen, mindestens aber näherungsweise identischen Radien oder Fasen ausgeführt sind. Hierdurch kann der tragende Bereich vergrößert werden.

In einer weiteren vorteilhaften Ausgestaltung der Erfindung kann vorgesehen sein, dass das radiale Spiel zwischen der mindestens einen Nut und Nase in dem Labyrinth zwischen 0,6 und 2,25mm beträgt. Bezogen auf ein übliches Spiel in einem Kettengelenk zwischen 0,4 und 1,5mm je nach Umgebungsbedingungen sollte das Spiel zwischen Nut und Nase im Labyrinth ca. 50% größer ausgeführt werden. So ist sichergestellt, dass keine Berührung der Labyrinthe unter normaler Betriebskraft erfolgt. Das axiale Spiel kann identisch eingestellt werden.

In einer vorteilhaften Ausgestaltung der Erfindung kann vorgesehen sein, dass die Labyrinthdichtung hinterschnitten ausgestaltet ist, insbesondere dass die mindestens eine Nut und Nase schwalbenschwanzförmig ausgestaltet sind. Durch die Kettenzugkraft und die unvermeidbare Biegung der Bolzen entsteht eine Kraftkomponente, welche die Außenlasche axial auf dem Bolzen belastet. Dies kann dazu führen, dass die Außenlasche vom Bolzen gezogen wird. Durch die oben genannte Maßnahme können die Labyrinthe bei einer geeigneten Ausführung die axiale Sicherung der Bolzen optimieren.

Es ist vorgesehen, dass die Außenlasche einen zur Kettenmitte versetzten Abschnitt aufweist, wobei der versetzte Abschnitt in einem mittigen Bereich der Außenlasche zwischen den Kettengelenken angeordnet ist.

Durch die Kettenzugkraft werden die am Kraftfluss beteiligten Komponenten der Gelenkkette bis zu einer bestimmten Kraft rein elastisch verformt. Diese Verformung hat Einfluss auf den Kontakt zwischen Gelenkbuchse und Kettenbolzen. Durch die Durchbiegung des Bolzens verlagert sich der Kontakt in den äußeren Bereich der Buchsenbohrung. Dieser Effekt verstärkt sich bei steigender Kettenzugkraft. Rechnerisch kann näherungsweise von einer punktförmigen Berührung zwischen der Buchse und dem Bolzen ausgegangen werden.

Durch den Pressverband zwischen den Bolzen und den Außenlaschen wird die Außenlasche durch die Biegung des Bolzens ebenfalls verformt. Die Folge ist ein Durchbiegen der Außenlasche zur Kettenmitte. Daraus resultieren in der Außenlasche Zugspannungen auf der zur Kettenmitte gewanden Seite und Druckspannen auf der nach außen gewanden Seite. Diese Spannungen überlagern sich mit den Zugspannungen innerhalb der Lasche, welche aus den Kettenzugkräften resultieren.

Wie bereits ausgeführt ist es vorgesehen, dass die Biegespannungen in den Außenlaschen dadurch reduziert werden, dass die Außenlasche einen zur Kettenmitte versetzten Abschnitt aufweist. Durch diese Maßnahme kann die Abschnittsmittelachse durch den unter Zugbelastung der Gelenkkette zu erwartenden Punkt der Kraftübertragung zwischen Buchse und Bolzen gehen. Im Ergebnis kommen überlagernde Biegespannungen im beschriebenen Abschnitt erst gar nicht auf bzw. werden auf ein Minimum reduziert.

Es kann vorgesehen sein, dass die Außenlasche und/oder die Innenlasche tailliert ausgestaltet ist.

Üblicherweise weisen die Laschen unterschiedliche Querschnitte senkrecht zur Kettenzurichtung auf. Im Bereich der Bohrungen ergeben sich deutlich reduzierte Querschnittsflächen. Der mittlere Bereich der Lasche weist hingegen eine erheblich größere Querschnittsfläche auf. Ziel ist es, die Querschnittsflächen derart anzupassen, dass sich näherungsweise gleiche Spannungsverteilungen ergeben.

Hierzu wird vorgeschlagen, die Lasche entsprechend zu taillieren, so dass sich die Querschnittsflächen senkrecht zur Kettenzugrichtung in großen Bereichen der Lasche annähern. Hierdurch verteilen sich die Spannungen im mittleren Bereich der Lasche gleichmäßiger über den gesamten Querschnitt.

Es kann vorgesehen sein, dass die Innenlasche und/oder die Außenlasche mit mindestens einer Verstärkung ausgestattet ist, wobei an jedem der Laschenköpfe der Innenlasche und/oder der Außenlasche zwei zueinander und zu der Längsachse der Innenlasche und/oder der Außenlasche beabstandete Verstärkungen angeordnet sind. Insbesondere kann dabei die Verstärkung als Verdickung der Laschenwandung auf der von der Laschenmitte abgewandten Seite der Bohrung ausgeführt sein.

Die Verstärkung ist vorzugsweise im Bereich eines Winkels von 20° bis 50°, weiter vorzugweise im Bereich zwischen 25° und 40°, bezogen auf die Längsachse der Lasche und den Mittelpunkt der Bohrung im beziehungsweise am Laschenkopfsegment, angeordnet. Die Verstärkung kann als einfache Verdickung bzw. Materialverstärkung ausgestaltet sein. Mit anderen Worten, der Laschenkopf ist in dem Bereich 20° bis 50°, weiter vorzugweise im Bereich zwischen 25° und 40°, dicker als in den übrigen Bereichen von 0° bis 20° bzw. 50° bis 90° ausgestaltet. Als 0° Winkel soll dabei die Laschenlängsachse angenommen werden.

Hinsichtlich des Ausmaßes der Verstärkung kann der Querschnitt der Lasche im Übergang vom Laschenkopfsegment zur inneren Lasche herangezogen werden, dergestalt, dass der Querschnitt der Verdickung, gemessen an der Querschnittsfläche mit dem größten Radius durch den verstärkten Bereich, 5% bis 25%, vorzugweise 10% bis 18%, größer als der Bohrungswandungsquerschnitt des jeweiligen Laschenkopfsegmentes sein soll. Mit anderen Worten, der sich bei einem Schnitt durch die Verstärkung ergebende Querschnitt an der Stelle des größten Radius vom Mittelpunkt der Bohrung bis zu Außenkante der Lasche, insbesondere des verstärkten Laschenkopfsegmentes, soll um 5% bis 25%, vorzugweise 10% bis 18%, größer als der Bohrungswandungsquerschnitt des verstärkten Laschenkopfsegmentes sein.

Diese Auslegungen lassen sich selbstverständlich auf die Verstärkung der weiteren Laschenkopfsegmente übertragen.

Die Querschnittsflächen der Laschen werden durch die notwendigen Bohrungen zum Einbringen der Buchsen und Bolzen im Bereich der Laschenköpfe zwangsläufig geschwächt. Durch das Übertragen der Kettenzugkräfte ergeben sich in diesem kritischen Querschnitt, sowie im Kopfbereich der Laschen erhöhte Spannungskonzentrationen.

Durch das lokale Verstärken dieses Bereiches der Laschen kann die Bruchkraft bei festgelegten Kettenabmessungen (Buchsen-, Bolzendurchmesser, Laschenhöhe, Laschenstärke, Laschenlänge, Teilung ...) erhöht werden.

Es kann vorgesehen sein, dass der Querschnitt senkrecht zur Längsachse der mindestens einen Innenlasche und/oder der mindestens einen Außenlasche entlang der Längsachse der Lasche weniger als 20%, vorzugsweise weniger als 10% voneinander abweicht, weiter vorzugsweise identisch ist.

Während des Betriebs können durch auftretende Störfälle, Überlastsituationen oder weitere Einflüsse Längungen der Kette erforderlich werden. Diese Längenänderungen verteilen sich innerhalb der Kette auf diejenigen Bereiche, welche die geringste Steifigkeit aufweisen. Bei wiederholtem Auftreten dieser Belastung besteht an diesen Positionen die Gefahr der Materialermüdung.

Aufgrund der großen Bohrungen im Kopfbereich der Laschen (zur Aufnahme der Buchsen und Bolzen) sind in diesem Bereich die geringsten Querschnitte und somit Steifigkeiten der Laschen vorzufinden.

Einer Materialermüdung kann durch die oben genannte Maßnahme entgegengewirkt werden. Es sollten für die übrige Lasche Laschenquerschnitte gewählt werden, die den Querschnitten im kritischen Bereich, also dem Bereich in der Mitte der Laschenbohrung, entsprechen. Anzustrebende Abweichungen zwischen den einzelnen Querschnittsflächen liegen bei ca. 20%.

Vorzugweise sollten Abweichungen kleiner 10% eingehalten werden, noch weiter vorzugsweise sollten die einzelnen Querschnittsflächen identisch sein. Die Abschnitte mit identischen beziehungsweise annähernd identischen Querschnitten sind in Laschenlängsrichtung möglichst durchgängig auszuprägen.

Die Kettenbauteile, insbesondere die Innenlaschen und/oder die Außenlaschen, können so hinsichtlich ihrer Steifigkeit möglichst homogen ausgeführt werden. Dies verteilt notwendige Längenänderungen während des Betriebs auf größere Bereiche der Kette und reduziert somit die Gefahr der Materialermüdung.

Aufgrund der konstruktiven und geometrischen Gegebenheiten einer Kette sind vor allem die Kettenlaschen zu betrachten. Durch das bereits beschrieben Taillieren kann der Querschnitt der Lasche im mittleren Bereich deutlich reduziert werden und dem Querschnitt im Bereich der Bohrungen angenähert werden, insbesondere diesen sogar unterschreiten.

Darüber hinaus können mithilfe von Bohrungen in den mittleren Laschenbereichen die Steifigkeiten angepasst werden. Diese Ausführung ist vor allem dann zu nutzen, wenn aus bestimmten Gegebenheiten die äußere Kontur der Laschen fest vorgegeben ist. Dies kann beispielsweise aus einer gleitenden Abtragung von Kräften über die Laschen resultieren.

Alle oben vorgeschlagenen Maßnahmen können einzeln oder in beliebiger Kombination an einer Gelenkkette vorgenommen werden. Sie eigenen sich ferner für die Innenlasche und/oder die Außenlasche einer Gelenkkette.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine herkömmliche Gelenkkette mit Andeutung der Streckenlast zwischen Bolzen und Buchse;
- Fig. 1a: eine herkömmliche Gelenkkette mit hoher Zugbelastung und punktueller Kraftübertragung zwischen Bolzen und Buchse;
- Fig. 1b: eine erfindungsgemäße Gelenkkette mit einem zur Kettenmitte versetzten Abschnitt;
- Fig. 2: eine herkömmliche Außenlasche einer Gelenkkette;
- Fig. 2a: eine taillierte Außenlasche einer erfindungsgemäßen Gelenkkette;
- Fig. 2b: Querschnitt BMQ gemäß Schnitt X-X;
- Fig. 2c: Querschnitt LMQ gemäß Schnitt Y-Y;
- Fig. 3: eine erfindungsgemäße Lasche mit einer verstärkten Kontur im Bereich der Laschenköpfe;
- Fig. 4: eine Querschnittdarstellung einer Gelenkkette mit einer Labyrinthdichtung zwischen der Außenlasche und der Innenlasche;
- Fig. 4a: eine vergrößerte Darstellung gemäß Fig. 4;
- Fig. 4b: eine Querschnittdarstellung einer Gelenkkette mit einer Labyrinthdichtung zwischen der Außenlasche und der Innenlasche mit eingelegtem Ring als Nasen;
- Fig. 4c: Varianten von Nut und Nase in der Labyrinthdichtung;
- Fig. 5: eine hinsichtlich ihrer Steifigkeit möglichst homogen ausgestaltete Gelenkkette;
- Fig. 5a: Darstellung von Querschnitten einer Kette nach Fig. 5;
- Fig. 6: eine erfindungsgemäße Gelenkkette in einer perspektivischen Darstellung.

Folgende Bezugszeichen werden in den Abbildungen verwendet:
- 1: Innenlasche
- 2: Außenlasche
- 3: Buchse
- 4: Bolzen
- 5: Bohrung

- KM: Kettenmittelachse / Kettenmittellinie
- L: Laschenlängsachse / Laschenlängslinie
- LM: Laschenmittelachse / Laschenmittellinie
- LMQ: Laschenmittelachsenquerschnitt
- B: Mittelpunkt der Bohrung
- BM: Bohrungsmittelachse / Bohrungsmittellinie
- BMQ: Bohrungswandungsquerschnitt

- 11: Punkt der Kraftübertragung
- 12: Abschnitt der Außenlasche
- 13: Abschnittsmittellinie
- 14: Linie durch den Punkt 11

- Y: Abstand zwischen Kettenmittellinie und Versatzmittellinie
- Z: Zugrichtung
- S: Streckenlast

- 21: Taillierung
- 22: entfernter Bereich

- 31: verstärkter Bereich / Verstärkung / Verdickung

- 41: Nase / Ring
- 42: Nut

- LN: Länge der Nase
- TN: Tiefe der Nut
- D: durchschnittliche Dicke der Lasche
- BN: Breite der Nase
- BU: Breite der Nut

- 51: Taillierung
- 52: Aussparung

Der Aufbau einer Gelenkkette ist dem Fachmann hinreichend bekannt. Eine Gelenkkette, insbesondere eine Buchsenkette, ist im Wesentlichen aus zwei aneinander gereihten Elementen aufgebaut. Diese Elemente werden auch als Innen- und Außenglied bezeichnet. Ein Außenglied besteht in der Regel aus zwei Außenlaschen 2, welche durch zwei Bolzen 4 miteinander verbunden sind. Ein Innenglied setzt sich in der Regel aus zwei Innenlaschen 1 zusammen, die mittels zweier Buchsen 3 miteinander verbunden sind.

Jeweils eine Buchse 3 und ein in die Buchse eingesteckter Bolzen 4 benachbarter Kettenglieder bilden ein Kettengelenk. Diese Gelenke ermöglichen der Gelenkkette beispielsweise ein Umschlingen der im Antriebsstrang befindlichen Kettenräder. Die vorgenannte Ausführungsform bildet eine einfache Gelenkkette. Denkbar sind selbstverständlich auch mehr Laschen pro Innen- bzw. Außenglied. Denkbar sind auch weniger Laschen pro Kettenglied, etwa bei einer Blocklasche bzw. Blocklaschenkette.

Zur Orientierung sollen einige Bereiche der Laschen bzw. Gelenkkette näher definiert werden. Die nachfolgenden Achsen definieren geometrische Zusammenhänge.

Die Gelenkkette weist eine sich in Längsrichtung der Gelenkkette erstreckende Kettenmitte KM auf, die als Kettenmittelachse angesprochen werden kann.

Die Innenlasche 1 und/oder die Außenlasche 2 weisen jeweils mindestens zwei Bohrungen 5, 5a zur Aufnahme der Buchsen 3 bzw. der Bolzen 4 auf.

Die Innenlasche 1 und/oder die Außenlasche 2 weisen jeweils eine Laschenlängsachse L auf, die sich mittig in Längsrichtung der Lasche erstreckt.

Die Innenlasche 1 und/oder die Außenlasche 2 weist eine Laschenmittelachse LM auf, die, vorzugsweise mittig, zwischen den Bohrungen 5 bzw. 5a angeordnet ist und senkrecht zu der Laschenlängsachse L ausgerichtet ist.

Die Innenlasche 1 und/oder die Außenlasche 2 bzw. deren Bohrungen 5 bzw. 5a weisen jeweils Bohrungsmittelachsen BM₁ bzw. BM₂ auf, die durch die Mitte der Bohrungen gehen und senkrecht zu der Laschenlängsachse L ausgerichtet sind. Der Mittelpunkt der Bohrung 5 bzw. 5a soll mit dem Bezugszeichen B₁ bzw. B₂ gekennzeichnet werden.

Entlang der so definierten Achsen ergeben sich einige Querschnitte bzw. Bereiche die nachfolgend näher beschrieben werden sollen.

Die Laschenmittelachse LM definiert einen Laschenmittelachsenquerschnitt LMQ. Je nachdem, ob die Lasche in der Mitte mit einer Öffnung versehen ist, ergeben sich ggf. ein erster Laschenmittelachsenquerschnitt LMQ₁ und ein zweiter Laschenmittelachsenquerschnitt LMQ₂. LMQ ist die Summe aus LMQ₁ und LMQ₂ bzw. weiterer Teilquerschnitte.

Die Bohrungsmittelachsen BM₁ und BM₂ grenzen den mittleren Bereich IL der Lasche von den Laschenköpfen LK1 bzw. LK2 ab.

Die Laschenlängsachse L unterteilt die Laschenköpfe LK1 bzw. LK2 in jeweils zwei Laschenkopfsegmente, insbesondere also den ersten Laschenkopf LK1 in die Segmente S1 und S2, sowie den zweiten Laschenkopf LK2 in die Segmente S3 und S4.

Die jeweiligen Laschenkopfsegmente sind über Bohrungsgswandungsquerschnitte, entsprechend S1 mit BMQ₁, S2 mit BMQ₂, S3 mit BMQ₃ und S4 mit BMQ₄ mit dem mittleren bzw. inneren Bereich IL der Lasche verbunden. Die jeweilige Bohrungsmittelachse BM₁ bzw. BM₂ verläuft durch die jeweiligen Querschnitte, sprich BM1 durch BMQ₁ und BMQ₂ bzw. BM2 durch BMQ₃ und BMQ₄.

Für eine Gelenkkette werden Maßnahmen zur Steigerung der Kettenzugkraft oder zumindest gleicher Kettenzugkraft bei reduziertem Gewicht vorgeschlagen, insbesondere unter Beibehaltung oder weitgehender Beibehaltung der sonstigen Dimensionierungsparameter der Gelenkkette. Dies erhöht die Wirtschaftlichkeit der Kette und schont die Ressourcen.

Eine erste Maßnahme stellt der Versatz eines Abschnitts 12 der Lasche bzw. der Laschen, vorzugsweise der mittlere Abschnitt, insbesondere der Außenlasche, in Richtung der Kettenmitte KM dar.

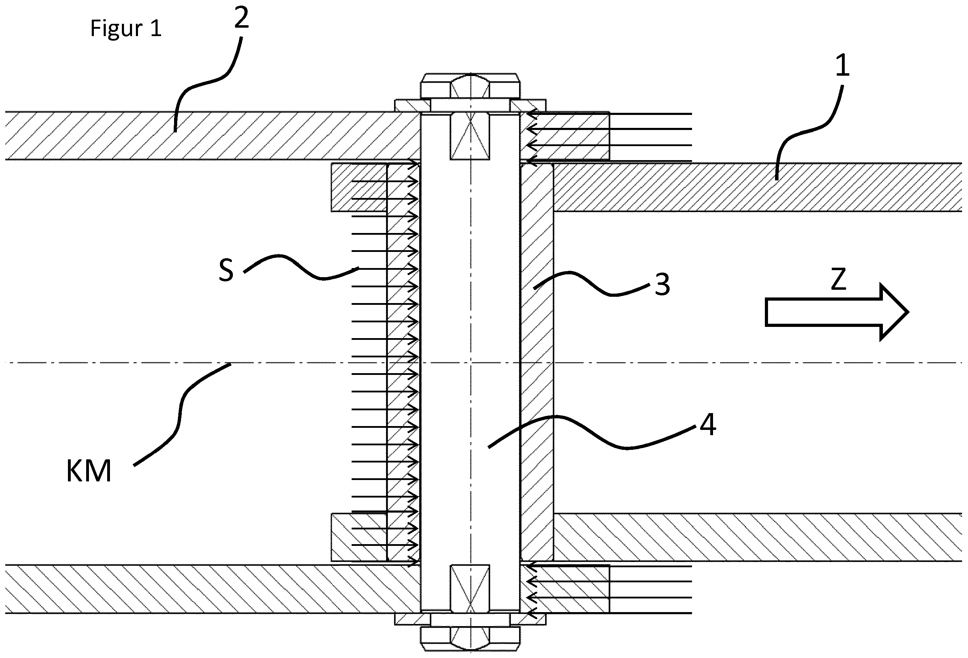

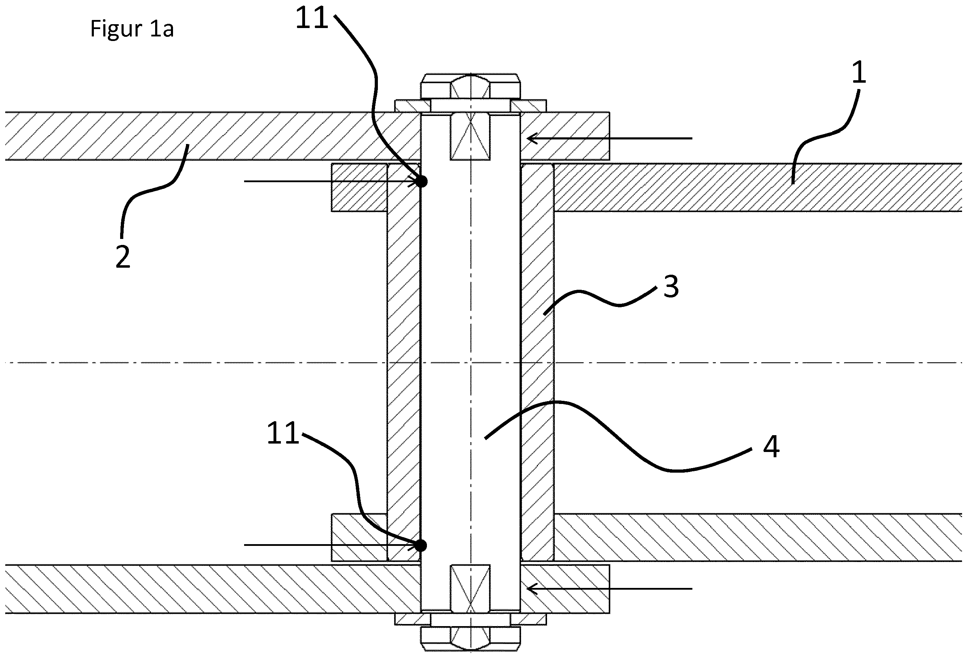

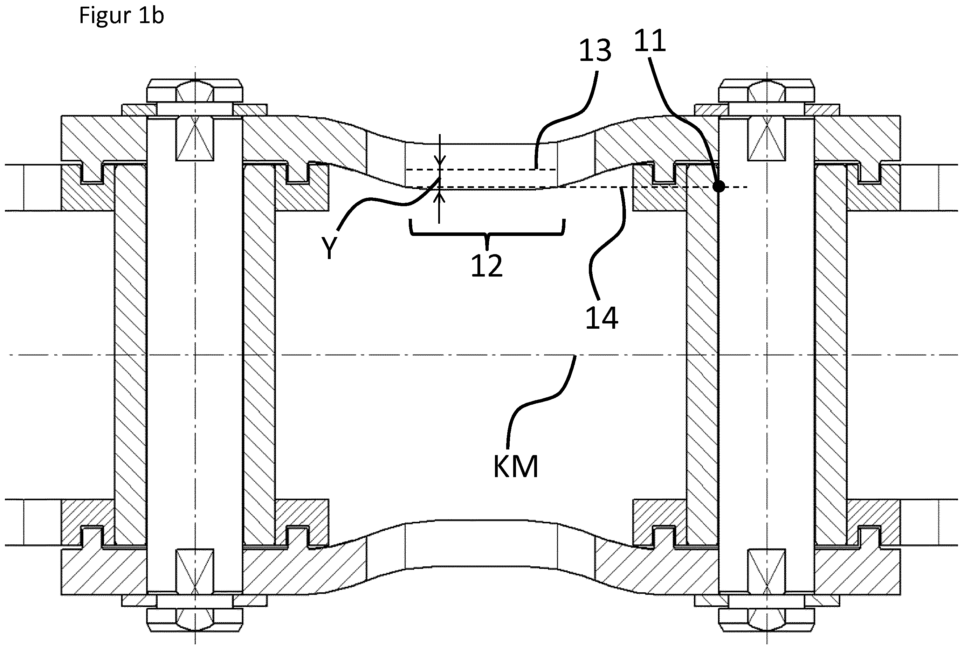

Die Ausgangssituation gestaltet sich wie folgt. Eine herkömmliche Gelenkkette ist in der Fig. 1 dargestellt.

Theoretisch und ohne Berücksichtigung einer elastischen Verformung erfolgt die Übertragung einer Zugkraft zwischen dem Bolzen und der Buchse als reine Streckenlast. Dies soll durch die Pfeile S in Fig. 1 dargestellt werden. Angedeutet ist ebenfalls die Zugrichtung über den Pfeil Z.

Durch die Kettenzugkraft werden die am Kraftfluss beteiligten Komponenten der Gelenkkette jedoch bis zu einer bestimmten Kraft rein elastisch verformt. Diese Verformung hat Einfluss auf den Kontakt zwischen Gelenkbuchse und Kettenbolzen. Durch die Durchbiegung des Bolzens verlagert sich der Kontakt in den äußeren Bereich der Buchsenbohrung. Dieser Effekt verstärkt sich bei steigender Kettenzugkraft. Rechnerisch kann von einer punktförmigen Berührung zwischen der Buchse und dem Bolzen ausgegangen werden. Die sich ergebende Position bzw. Punkt der Kraftübertragung ist in der Fig. 1a durch den Punkt mit dem Bezugszeichen 11 dargestellt.

Durch den Pressverband zwischen dem Bolzen und der Außenlasche wird die Außenlasche durch die Biegung des Bolzens ebenfalls verformt. Die Folge ist ein Durchbiegen der Außenlasche zur Kettenmitte KM. Daraus resultieren in der Außenlasche Zugspannungen auf der zur Kettenmitte KM gewandten Seite und Druckspannen auf der nach außen gewanden Seite. Diese Spannungen überlagern sich mit den Zugspannungen innerhalb der Lasche, welche aus den Kettenzugkräften resultieren.

Erfindungsgemäß ist vorgesehen, dass ein Abschnitt 12 der Außenlasche in Richtung der Kettenmittelachse KM versetzt ist. Eine derartige erfindungsgemäße Gelenkkette ist in Fig. 1b dargestellt.

Hierdurch kann insbesondere die Biegespannung in der Außenlasche 2 reduziert werden. Dies erhöht die Kettenzugkraft bzw. die Wirtschaftlichkeit der Gelenkkette und schont die Ressourcen. Der versetzte Abschnitt 12 weist eine Abschnittsmittellinie 13 auf, die parallel zu der Kettenmittelachse KM verläuft. Des Weiteren ist eine Linie 14 durch den Punkt 11 eingezeichnet, die ebenfalls parallel zu der Abschnittsmittellinie 13 bzw. die Kettenmittellinie KM verlaufen soll. Der senkrechte Abstand zwischen der Linie 14 und der Abschnittsmittellinie 13 ist mit dem Bezugszeichen Y eingezeichnet.

Der Betrag um den der oben genannte Versatz erfolgen soll, lässt sich anhand der Abschnittsmittellinie 13 des versetzten Abschnitts 12 in Bezug auf den oben bereits skizzierten Punkt 11 der Kraftübertragung im elastischen Verformungsfalle definieren. Der Effekt der Reduktion von Biegespannungen in der Außenlasche ist umso größer, je exakter die Abschnittsmittellinie 13 des versetzten Abschnitts 12 durch den Kraftübertragungspunkt 11 geht oder anders ausgedrückt, je kleiner der Abstand Y ist, umso größer ist der Effekt der Reduktion von Biegespannungen in der Außenlasche.

Mit anderen Worten, vorzugsweise geht die Abschnittsmittelinie 13 exakt durch den Kraftübertragungspunkt 11 oder zumindest näherungsweise.

Der Effekt der Reduktion ist ferner umso größer, je näher der versetzte Abschnitt an das Kettengelenk herangebracht werden kann, wobei der Versatz natürlich im Bereich der Laschenköpfe geometrisch bedingt nicht zu realisieren ist.

Die Kettenzugkraft einer Gelenkkette kann auch durch nachfolgende Maßnahme, insbesondere unter Beibehaltung oder weitgehender Beibehaltung der sonstigen Dimensionierungsparameter der Gelenkkette, gesteigert werden bzw. zumindest die gleiche Kettenzugkraft bei reduziertem Gewicht erreicht werden.

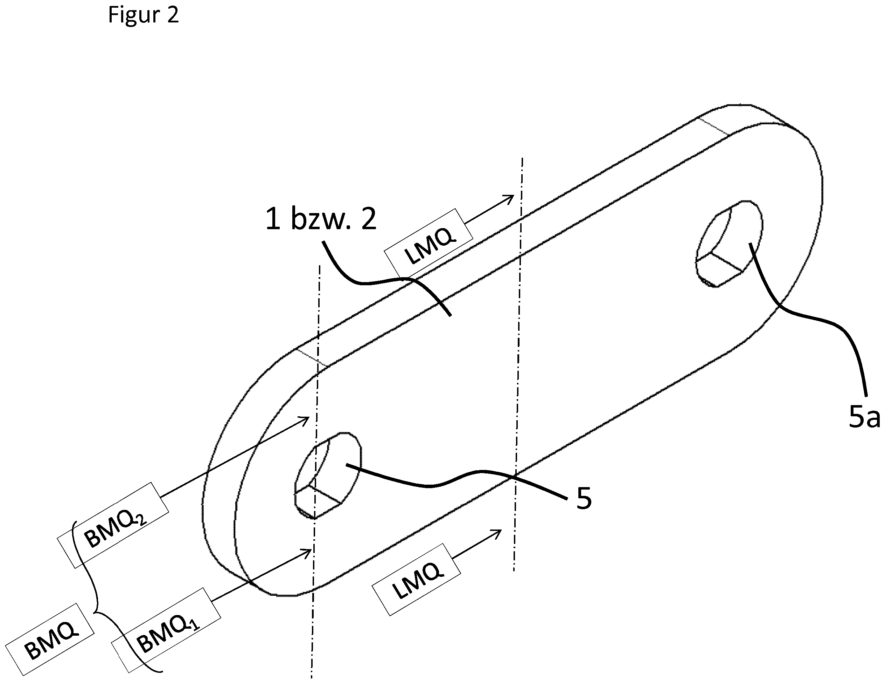

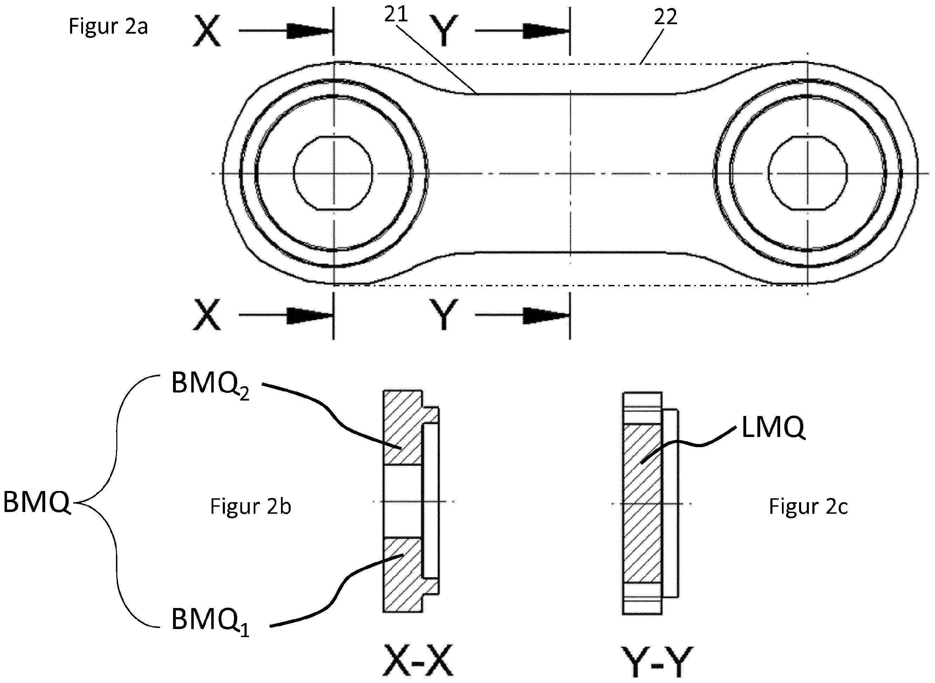

Die Form einer üblichen Lasche ist in der Fig. 2 dargestellt. Die unterschiedlichen Querschnitte senkrecht zur Kettenzurichtung sind ebenfalls eingezeichnet. Im Bereich der Bohrungen 5 ergeben sich deutlich reduzierte Querschnittsflächen BMQ. Der mittlere Bereich der Lasche weist hingegen eine erheblich größere Querschnittsfläche LMQ auf. Ziel ist es, die Querschnittsflächen BMQ und LMQ derart anzupassen, dass sich näherungsweise gleiche Spannungsverteilungen ergeben.

Hierzu wird folgende Maßnahme vorgeschlagen. Durch die Wahl geeigneter Fertigungsverfahren (Schmieden, Lasern, Wasserstrahlschneiden...) kann die Kontur der Lasche beliebig ausgeführt werden. Durch das Entfernen der Bereiche mit minimalsten Spannungen ergibt sich eine taillierte Form der Lasche. In den Abbildungen ist die Kontur der Taillierung mit dem Bezugszeichen 21 und durch die strichpunktierte Linie 22 sind die entfernten Bereiche gekennzeichnet. Die Taillierung wird derart ausgeführt, dass sich die Querschnittsflächen senkrecht zur Kettenzugrichtung in großen Bereichen der Lasche annähern. In der Fig. 2a ist schematisch eine taillierte Außenlasche in einer Draufsicht dargestellt. In Fig. 2b ist ein Querschnitt BMQ₁ und BMQ₂ gemäß Schnitt X-X und in Fig. 2c entsprechend ein Querschnitt LMQ gemäß Schnitt Y-Y dargestellt. Es soll vorzugsweise gelten, dass BMQ₁ + BMQ₂ gleich oder annähernd gleich LMQ sein soll. Oder auch anders ausgedrückt, Q(L), mit L in Längsrichtung der Lasche soll konstant oder annähernd konstant sein.

Der Spannungsverlauf innerhalb einer Lasche umschlingt die Bohrungen in den Laschenaugen. Im mittleren Bereich der Lasche verteilen sich die Spannungen gleichmäßiger über den gesamten Querschnitt.

Die Kettenzugkraft einer Gelenkkette kann auch durch nachfolgende Maßnahme, insbesondere unter Beibehaltung oder weitgehender Beibehaltung der sonstigen Dimensionierungsparameter der Gelenkkette, gesteigert werden bzw. zumindest die gleiche Kettenzugkraft bei reduziertem Gewicht erreicht werden.

Hintergrund ist, dass die Querschnittsflächen der Laschen durch die notwendigen Bohrungen zum Einbringen der Buchsen und Bolzen im Bereich der Laschenköpfe zwangsläufig geschwächt werden. Durch das Übertragen der Kettenzugkräfte ergeben sich in diesen, als kritische Querschnitte bezeichneten Querschnitten im Kopfbereich der Laschen erhöhte Spannungskonzentrationen.

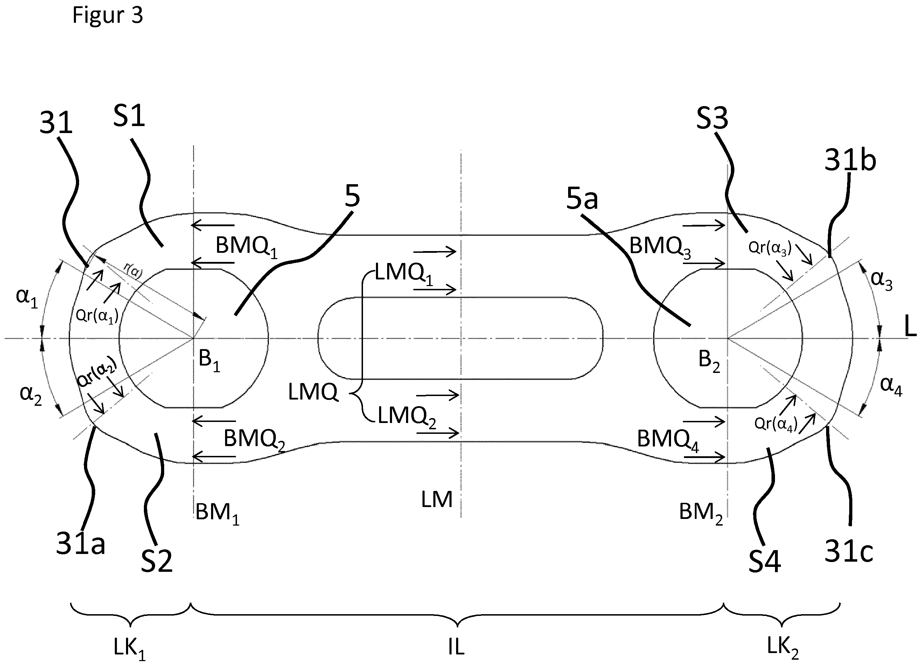

Durch das lokale Verstärken der Laschenköpfe LK1 bzw. LK2 der Innen- und/oder Außenlaschen kann die Bruchkraft bei festgelegten Kettenabmessungen (Buchsen-, Bolzendurchmesser, Laschenhöhe, Laschenstärke, Laschenlänge, Teilung...) erhöht werden. Eine derart optimierte Innenlasche kann beispielsweise die in Fig. 3 dargestellte Kontur aufweisen. Der Bereich der Verstärkung ist mit dem Bezugszeichen 31 gekennzeichnet. Der Radius des Kopfbereiches einer solchen Lasche kann als Funktion um den Mittelpunkt der Bohrung über den Winkel α als Laufkoordinate definiert werden.

Es ist zu erkennen, dass die Außenlasche und/oder die Innenlasche mit mindestens einer Verstärkungen 31 ausgestattet ist, insbesondere, dass jedes Laschenkopfsegment S1 bis S4 mit je einer Verstärkung 31 bis 31c ausgestattet ist.

Die Lage und das Ausmaß der Verstärkung lassen sich anhand der ersten Verstärkung 31 an dem ersten Laschenkopfsegment S1 näher beschreiben.

Die Verstärkung 31 ist vorzugsweise im Bereich eines Winkels α₁ von 20° bis 50°, weiter vorzugweise im Bereich zwischen 25° und 40°, bezogen auf die Längsachse L der Lasche und den Mittelpunkt B der Bohrung 5 in oder an der Lasche, insbesondere an der Außenseite des Laschenkopfsegments S1, angeordnet. Die Laschenlängsachse L definiert entsprechend den Winkel 0°.

Hinsichtlich des Ausmaßes der Verstärkung 31 als Verdickung des Laschenkopfsegmentes S1 kann der Bohrungswandungsquerschnitt BMQ₁ zwischen der inneren Lasche IL und dem ersten Laschenkopfsegment S1 herangezogen werden. Wie bereits oben dargestellt soll der Bohrungswandungsquerschnitt BMQ₁ mittig und senkrecht über der Bohrung angeordnet sein. Ausgehend von diesem Querschnitt, ist vorzugsweise vorgesehen, dass der Querschnitt des verstärkten Bereiches, jeweils radial ausgehend von dem jeweiligen Bohrungsmittelpunkt B, 5% bis 25%, vorzugweise 10% bis 18%, größer als der Bohrungswandungsquerschnitt BMQ₁ des jeweils verstärkten Laschenkopfsegmentes sein soll. Mit anderen Worten der Querschnitt Q _{r(α1)} der verstärkten Wandung soll 5% bis 25%, vorzugweise 10% bis 18%, größer als der Bohrungswandungsquerschnitt BMQ₁ sein.

Diese Auslegungen lassen sich selbstverständlich auf die übrigen Verstärkungen 31a bis 31c übertragen. Die Querschnitte sind jedoch stets den jeweiligen Bohrungen und Positionen bezogen auf die Laschenlängsachse und die Laschenmittelachse zugeordnet, also BMQ₂ und Q _{r(α2)}, BMQ₃ und Q _{r(α3)} und BMQ₄ und Q _{r(α4)}.

Die Kettenzugkraft einer Gelenkkette mit mindestens einer Labyrinthdichtung im Bereich des Kettengelenks kann auch durch nachfolgende Maßnahme, insbesondere unter Beibehaltung oder weitgehender Beibehaltung der sonstigen Dimensionierungsparameter der Gelenkkette, gesteigert werden bzw. zumindest die gleiche Kettenzugkraft bei reduziertem Gewicht erreicht werden.

Das Eindringen von Verschmutzungen in den Gelenkbereich einer Kette kann durch Labyrinthe verzögert werden. Diese Labyrinthe können in Form von zusätzlichen Bauteilen (bspw. Lamellendichtring) oder besonders ausgeführte Laschen (Nuten und Nasen im Bereich der Teilungslöcher) in Kombination mit überstehenden Buchsen realisiert werden. Der Luftspalt innerhalb dieser Labyrinthe ist unter Berücksichtigung des Gelenkspiels, sowie auftretendem Verschleiß der Kettenbauteile einzustellen.

Zur Steigerung der Kettenzugkraft wird vorgeschlagen, die Nase 41 und die Nut 42 der Labyrinthdichtung an den Laschen derart ausführen, dass sich entsprechende Überdeckungen in Kettenzugrichtung ergeben. Hierzu wird vorgeschlagen, dass die mindestens eine Nase und Nut in einer Länge oder Tiefe zwischen 10% bis 50% der Laschenstärke ausgeführt sind, vorzugsweise in einem Bereich von 20% bis 40% der durchschnittlichen Laschenstärke D der jeweiligen Lasche. Mit der jeweiligen Lasche ist diejenige Lasche gemeint, in der sich die jeweilige Nut bzw. Nase befindet.

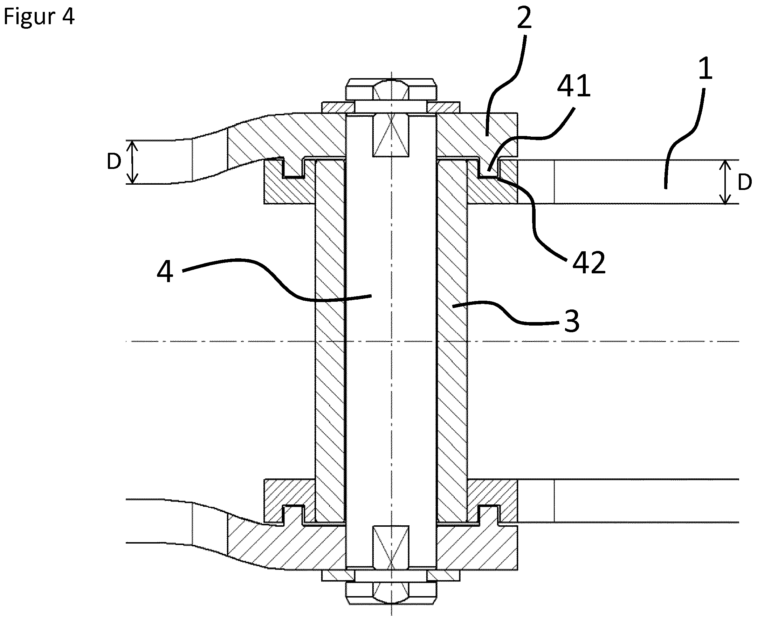

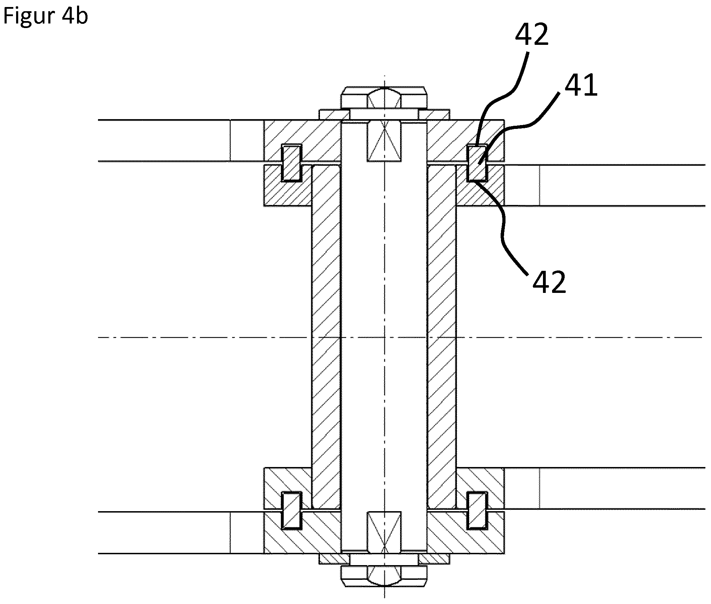

Diese Überdeckungen können auch durch zusätzliche Elemente erzeugt werden. Denkbar ist hierbei beispielsweise ein Ring, welcher in zwei Nuten der Innen- und Außenlasche während der Montage der Kette eingelegt wird. Eine derartige Alternative ist in der Fig. 4b dargestellt.

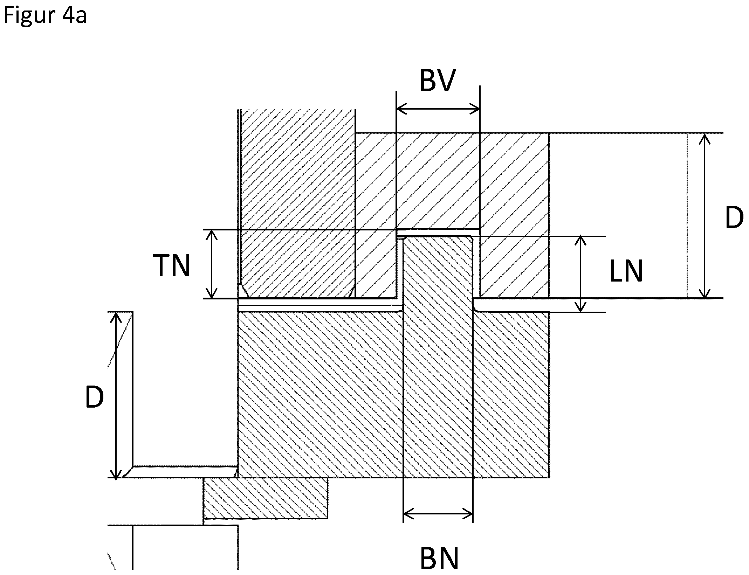

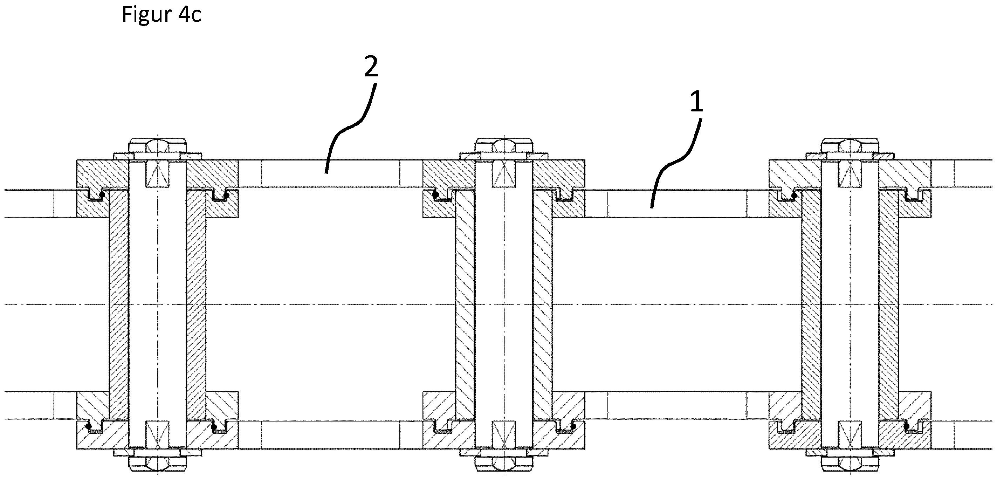

Eine Labyrinthdichtung einer Gelenkkette zwischen Innenlasche und Außenlasche in einem unbelasteten Ausgangszustand ist in der Fig. 4 dargestellt.

Eine vergrößerte Darstellung ist entsprechend in der Fig. 4a dargestellt. Hier sind auch die entsprechenden Spaltmaße und Breite der Nase BN bzw. Breite der Nut BU. Auch sind hier die jeweilige Nasenlänge LN und Nuttiefe TN dargestellt.

Es kann vorgesehen sein, dass die Breite der mindestens einen Nase und/oder Nut in einer Stärke ausgeführt ist, die im Bereich von 80% bis 120% der Nasenlänge LN bzw. Nuttiefe TN ist.

Es kann vorgesehen sein, dass die Ecken und Kanten der mindestens einen Nase und/oder Nut jeweils mit identischen Radien oder Fasen, mindestens aber näherungsweise identischen Radien oder Fasen ausgeführt sind. Hierdurch kann der tragende Bereich vergrößert werden.

Es kann vorgesehen sein, dass das radiale Spiel zwischen der mindestens einen Nut und Nase in dem Labyrinth zwischen 0,6 und 2,25mm beträgt. Bezogen auf ein übliches Gelenkspiel zwischen 0,4 und 1,5mm je nach Umgebungsbedingungen sollte das Spiel zwischen Nut und Nase im Labyrinth ca. 50% größer ausgeführt werden. So ist sichergestellt, dass keine Berührung der Labyrinthe unter normaler Betriebskraft erfolgt. Das axiale Spiel kann identisch eingestellt werden.

Wird nun eine Überlastung der Kette (Kettenzugkraft >> Betriebskraft) erzeugt, so werden sich die Laschen im Querschnittsbereich der Bohrungen längen. Sobald diese Längung den Luftspalt zwischen den Labyrinthflächen überschreitet, wird der Kraftfluss innerhalb der Kette teilweise über die Labyrinthflächen umgeleitet.

Dies führt zu einer geringeren Belastung der bereits verformten Bauteilbereiche (Bolzen, Buchse, Kopfbereiche der Innen- und Außenlaschen). Dabei ist klar, dass nicht alle Teile gleichzeitig entlastet werden können. Es ist jedoch möglich, die stärker dimensionierten Bauteile in bestimmten Bereichen stärker zu belasten und die schwächeren Bauteile zu entlasten. Auf diese Weise kann die Bruchkraft einer Kette in Summe optimiert werden. Die Abstimmung der Luftspalte innerhalb der Labyrinthe ist hierbei unter Berücksichtigung der Verformungsfähigkeiten der verwendeten Werkstoffe anzupassen. Durch die Verwendung von hochfesten und gleichzeitig verformungsfähigen Werkstoffen (bspw. 42CrMo4) können die Kraftübertragungen der Labyrinthe maximal genutzt werden.

Je nachdem wie das Labyrinth ausgeführt wird, können unterschiedliche Bauteile (oder Bauteilbereiche) im Kettenstrang entlastet werden, beispielsweise der Kopfbereich der Innenlasche, der Kopfbereich der Außenlasche, der Bolzen im Scherbereich.

Folgende bevorzugte Konstellationen haben sich in der Praxis für die Entlastung bestimmter Bereiche herauskristallisiert.
1. Nut in der Innenlasche / Nase an der Außenlasche
   1.1 beidseitig identisches Spiel --> entlastet Bolzen
   1.2 vergrößertes Spiel nach Innen --> entlastet Bolzen und Kopfbereich der Außenlasche
   1.3 vergrößertes Spiel nach Außen ---> entlastet Bolzen und Kopfbereich der Innenlasche
      Derartige Konstellationen sind von links nach rechts in der Abbildung Fig. 4c in der oberen Reihe dargestellt.
2. Nase an der Innenlasche / Nut in der Außenlasche
   2.1 beidseitig identisches Spiel --> entlastet Bolzen
   2.2 vergrößertes Spiel nach Innen --> entlastet Bolzen und Innenlasche
   2.3 vergrößertes Spiel nach Außen --> entlastet Bolzen und Außenlasche

Derartige Konstellationen sind von links nach rechts in der Abbildung Fig. 4c in der unteren Reihe dargestellt.

Eine weitere Maßnahme zur Verbesserung einer Gelenkkette, insbesondere zur Reduktion der Materialermüdung, wird nachfolgend vorgeschlagen.

Während des Betriebs können durch auftretende Störfälle, Überlastsituationen oder weitere Einflüsse Längungen der Kette erforderlich werden. Diese Längenänderungen verteilen sich innerhalb der Kette auf diejenigen Bereiche, welche die geringste Steifigkeit aufweisen. Bei wiederholtem Auftreten dieser Belastung besteht an diesen Positionen die Gefahr der Materialermüdung.

Einer Materialermüdung kann durch nachfolgende Maßnahmen entgegengewirkt werden.

Die Gelenkkette, insbesondere die Innenlaschen und/oder die Außenlaschen, werden hinsichtlich ihrer Steifigkeit dadurch möglichst homogen ausgeführt, dass der Querschnitt senkrecht zur Längsachse L der mindestens einen Innenlasche 1 und/oder die Außenlasche 2 entlang der Längsachse der L der Lasche weniger als 20%, vorzugsweise weniger als 10% voneinander abweicht, weiter vorzugsweise identisch ist. Mit anderen Worten, der Laschenmittelachsenquerschnitt LMQ soll genauso groß bzw. mit einer Abweichung von +- 20% bzw. 10% so groß sein, wie der gesamte Bohrungswandungsquerschnitt BMQ₁ + BMQ₂ einer Bohrung 5 bzw. der gesamte Bohrungswandungsquerschnitt BMQ₃ + BMQ₄ der anderen Bohrung 5a, mathematisch ausgedrückt LMQ = BMQ₁ + BMQ₂ +- 20% bzw. +- 10% und/oder LMQ = BMQ₃ + BMQ₄ +- 20% bzw. +-10%.

Dies verteilt notwendige Längenänderungen während des Betriebs auf größere Bereiche der Kette und reduziert somit die Gefahr der Materialermüdung.

Der Querschnitt LMQ kann entsprechend durch Materialausnehmungen eingestellt werden, die beispielsweise zu einer taillierten oder mit Aussparungen versehenen Lasche führen. Insbesondere wenn eine Ausnehmung in Form eines Laschendurchbruchs zur Einstellung des Querschnitts LMQ verwendet wird, setzt sich der Querschnitt dann, beispielsweise bei einer mittigen Öffnung, aus den Querschnitten LMQ₁ und LMQ₂ zusammen. So können mithilfe von Öffnung(en) in den mittleren Laschenbereichen die Steifigkeiten angepasst werden. Diese Ausführung ist vor allem dann zu nutzen, wenn aus bestimmten Gegebenheiten die äußere Kontur der Laschen fest vorgegeben ist. Dies kann beispielsweise aus einer gleitenden Abtragung von Kräften über die Laschen resultieren.

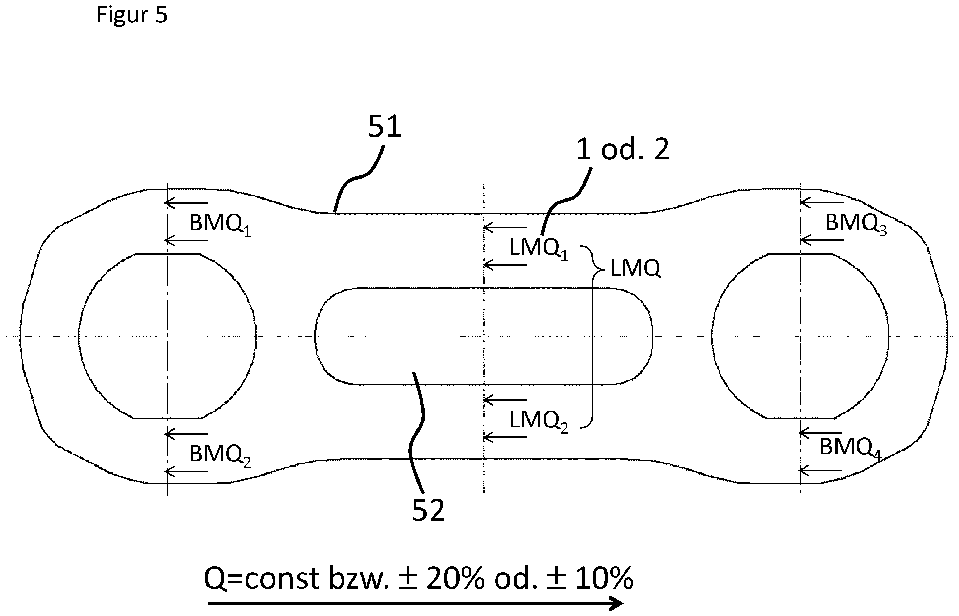

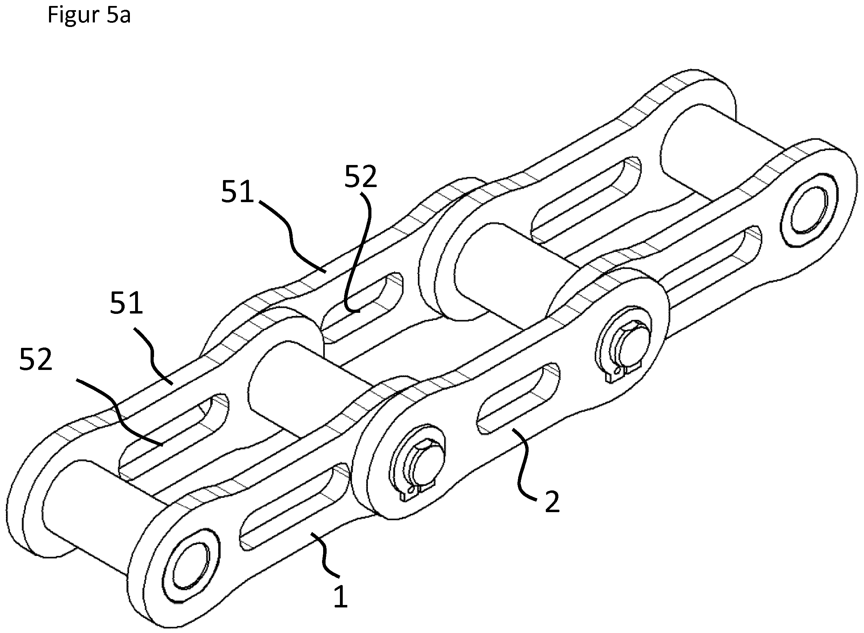

Eine hinsichtlich ihrer Steifigkeit möglichst homogen ausgestaltete Gelenkkette ist in der Fig. 5a dargestellt. In der Fig. 5 sind entsprechende Querschnitte angedeutet.

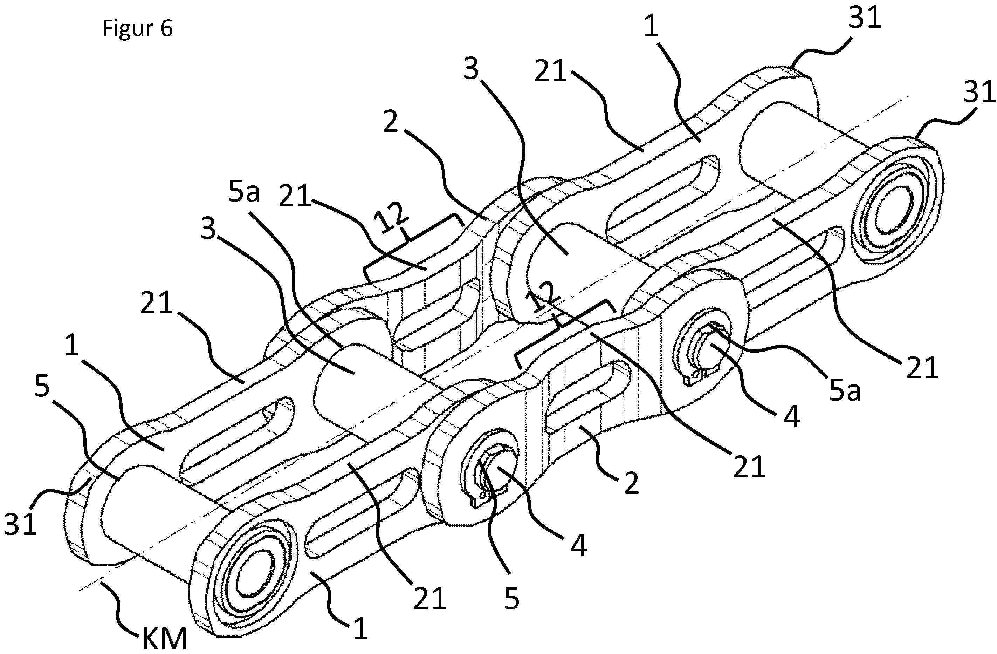

Eine erfindungsgemäße Gelenkkette, bei der alle oben skizzierten Maßnahmen verwirklicht wurden, ist in der Fig. 6 dargestellt. Alle oben vorgeschlagenen Maßnahmen können einzeln oder in beliebiger Kombination an einer Gelenkkette vorgenommen werden. Sie eigenen sich ferner für die Innenlasche und/oder die Außenlasche einer Gelenkkette.

## Patentansprüche

1. Gelenkkette, umfassend mindestens
- eine Innenlasche (1),
- eine Außenlasche (2),
- eine Buchse (3) und einen Bolzen (4), die ein Kettengelenk bilden,
wobei zwischen der Außenlasche (2) und der Innenlasche (1) eine Labyrinthdichtung vorgesehen ist, die mindestens eine Nase (41) und mindestens eine Nut (42) umfasst, wobei die mindestens eine Nase (41) und die mindestens eine Nut (42) in einer Länge (LN) oder Tiefe (TN) zwischen 10% bis 50% der durchschnittlichen jeweiligen Laschenstärke (D) ausgeführt sind, vorzugsweise in einem Bereich von 20% bis 40% der jeweiligen durchschnittlichen Laschenstärke (D), und wobei die Labyrinthdichtung so ausgebildet ist, dass bei einer Überlastung der Gelenkkette der Kraftfluss innerhalb der Gelenkkette teilweise über die von der mindestens einen Nase (41) und der mindestens einen Nut (42) gebildeten Labyrinthflächen umgeleitet wird, wobei die mindestens eine Nut (42) in der Innenlasche (1) ausgebildet ist und die mindestens eine Nase (41) an der Außenlasche (2) ausgebildet ist oder wobei die mindestens eine Nut (42) in der Außenlasche (2) ausgebildet ist und die mindestens eine Nase (41) an der Innenlasche (1) ausgebildet ist, und **dadurch gekennzeichnet, dass** die Gelenkkette eine sich in Längsrichtung erstreckende Kettenmitte (KM) aufweist, und wobei die Außenlasche (2) einen zur Kettenmitte (KM) versetzten Abschnitt (12) aufweist, wobei der versetzte Abschnitt (12) in einem mittigen Bereich der Außenlasche (2) zwischen den Kettengelenken angeordnet ist.

2. Gelenkkette nach Anspruch 1, **dadurch gekennzeichnet, dass** die Breite (BN bzw. BU) der mindestens einen Nase (41) und/oder Nut (42) in einer Stärke ausgeführt ist, die im Bereich von 80% bis 120% der Nasenlänge (LN) bzw. Nuttiefe (TN) ist.

3. Gelenkkette nach einem der Ansprüche 1 oder 2, **dadurch gekennzeichnet, dass** das radiale Spiel zwischen der mindestens einen Nut (42) und Nase (41) in dem Labyrinth zwischen 0,6 und 2,25mm beträgt.

4. Gelenkkette nach einem der Ansprüche 1 bis 3, **dadurch gekennzeichnet, dass** die Ecken und Kanten der mindestens einen Nase (41) und/oder Nut (42) jeweils mit identischen Radien oder Fasen, mindestens aber näherungsweise identischen Radien oder Fasen, ausgeführt sind.

5. Gelenkkette nach einem der Ansprüche 1 bis 4, **dadurch gekennzeichnet, dass** die Labyrinthdichtung hinterschnitten ausgestaltet ist, insbesondere dass die mindestens eine Nut (42) und Nase (41) schwalbenschwanzförmig ausgestaltet sind.

6. Gelenkkette nach einem der Ansprüche 1 bis 5, **dadurch gekennzeichnet, dass** der versetzte Abschnitt eine Abschnittmittelinie (13) parallel zur Kettenmitte (KM) aufweist, wobei sich die Kraftübertragung zwischen Buchse (3) und Bolzen (4) bei einer mittels Zugkraft belasteten Kette in einem Kraftübertragungspunkt (11) konzentriert, wobei die Abschnittsmittellinie (13) durch den Kraftübertragungspunkt (11) geht oder die Abschnittsmittellinie (13) näherungsweise durch den Kraftübertragungspunkt (11) geht.

7. Gelenkkette nach einem der Ansprüche 1 bis 6, **dadurch gekennzeichnet, dass** die Außenlasche und/oder die Innenlasche tailliert ausgestaltet ist.

8. Gelenkkette nach einem der Ansprüche 1 bis 7, **dadurch gekennzeichnet, dass** die Innenlasche (1) und/oder die Außenlasche (2) mit mindestens einer Verstärkung (31) ausgestattet ist, wobei an jedem der Laschenköpfe (LK1, LK2) der Innenlasche (1) und/oder der Außenlasche (2) zwei zueinander und zu der Längsachse (L) der Innenlasche (1) und/oder der Außenlasche (2) beabstandete Verstärkungen (31, 31a, 31b, 31c) angeordnet sind.

9. Gelenkkette nach einem der Ansprüche 1 bis 8, **dadurch gekennzeichnet, dass**
- die Innenlasche (1) und/oder die Außenlasche (2) jeweils mindestens zwei Bohrungen (5, 5a) im Bereich der Laschenköpfe zur Aufnahme der Buchse (3) bzw. des Bolzens (4) aufweisen, wobei
- die Innenlasche (1) und/oder die Außenlasche (2) jeweils eine Laschenlängsachse (L) aufweist, wobei
- die Innenlasche (1) und/oder die Außenlasche (2) jeweils eine Laschenmittelachse (LM) aufweist, die, vorzugsweise mittig, zwischen den Bohrungen (5, 5a) angeordnet ist und senkrecht zu der Laschenlängsachse (L) ausgerichtet ist, wobei
- die Innenlasche (1) und/oder die Außenlasche (2) jeweils Bohrungsmittelachsen (BM₁, BM₂) aufweisen, die durch die Mitte (B1 bzw. B2) der Bohrungen (5, 5a) gehen und senkrecht zu der Laschenlängsachse (L) ausgerichtet sind, wobei
- die Bohrungsmittelachsen (BM₁, BM₂) jeweils einen ersten Laschenkopf (LK1) und einen zweiten Laschenkopf (LK2) von dem Innenbereich (IL) der Lasche abgrenzen, wobei
- die Laschenlängsachse (L) den ersten Laschenkopf (LK1) in ein erstes Laschenkopfsegment (S1) und ein zweites Laschenkopfsegment (S2), sowie die Laschenlängsachse (L) den zweiten Laschenkopf (LK1) in ein drittes Laschenkopfsegment (S3) und ein viertes Laschenkopfsegment (S4) unterteilt, wobei
- die Laschenkopfsegmente (S1, S2, S3, S4) jeweils einen Bohrungswandungsquerschnitt (BMQ₁, BMQ₂, BMQ₃, BMQ₄) aufweisen, über den sie mit dem Innenbereich (IL) der Lasche verbunden sind, durch den die jeweilige Bohrungsmittelachse (BM₁ bzw. BM₂) geht.

10. Gelenkkette nach einem der Ansprüche 8 oder 9, **dadurch gekennzeichnet, dass** die Verstärkung (31 bzw. 31a bis 31c) im Bereich eines Winkels α von 20° bis 50°, weiter vorzugweise im Bereich zwischen 25° und 40°, bezogen auf die Längsachse L der Lasche und den Mittelpunkt (B₁ bzw. B₂) der Bohrung (5 bzw. 5a) in oder an der Lasche, insbesondere im oder am Laschenkopf, vorzugsweise in oder am Laschenkopfsegment angeordnet ist.

11. Gelenkkette nach einem der Ansprüche 8 bis 10, **dadurch gekennzeichnet, dass** die Verstärkung (31, 31a, 31, b, 31c) als Verdickung der Innenlasche (1) und/oder Außenlasche, insbesondere des Laschenkopfes (LK1, LK2), vorzugsweise des Laschenkopfsegmentes (S1, S2, S3, S4), ausgestaltet ist.

12. Gelenkkette nach einem der Ansprüche 8 bis 11, **dadurch gekennzeichnet, dass** der Querschnitt der Verstärkung (Qᵣₓ), jeweils radial ausgehend von dem jeweiligen Bohrungsmittelpunkt B, 5% bis 25%, vorzugweise 10% bis 18%, größer als der Bohrungswandungsquerschnitt (BMQₓ) des jeweils verstärkten Laschenkopfsegmentes ist.

13. Gelenkkette nach einem der Ansprüche 1 bis 12, **dadurch gekennzeichnet, dass** der Querschnitt senkrecht zur Längsachse (L) der mindestens einen Innenlasche (1) und/oder der mindestens einen Außenlasche (2) entlang der Längsachse der (L) der Lasche weniger als 20%, vorzugsweise weniger als 10% voneinander abweicht, weiter vorzugsweise identisch ist.

14. Gelenkkette nach Anspruch 13, **dadurch gekennzeichnet, dass** der Querschnitt durch Taillierungen (51) und/oder Aussparungen (52) der mindestens einen Innenlasche (1) und/oder der mindestens einen Außenlasche (2) eingestellt wird.

## Claims

1. Articulated chain, comprising at least
- one inner tab (1),
- one outer tab (2),
- one bush (3) and one pin (4) which form a chain joint,
wherein a labyrinth seal, which comprises at least one lug (41) and at least one groove (42), is provided between the outer tab (2) and the inner tab (1), wherein the at least one lug (41) and the at least one groove (42) are configured to have a length (LN) or depth (TN) of between 10% and 50% of the average respective tab thickness (D), preferably within a range of between 20% and 40% of the respective average tab thickness (D), and wherein the labyrinth seal is formed such that if the articulated chain is overloaded, the force flow inside the articulated chain is diverted in part via the labyrinth surfaces formed by the at least one lug (41) and the at least one groove (42), wherein the at least one groove (42) is formed in the inner tab (1) and the at least one lug (41) is formed on the outer tab (2) or wherein the at least one groove (42) is formed in the outer tab (2) and the at least one lug (41) is formed on the inner tab (1), and **characterized in that** the articulated chain has a chain center (KM) which extends in the longitudinal direction, and wherein the outer tab (2) has a portion (12) offset relative to the chain center (KM), wherein the offset portion (12) is arranged in a central region of the outer tab (2) between the chain joints.

2. Articulated chain according to claim 1, **characterized in that** the width (BN or BU) of the at least one lug (41) and/or groove (42) has a thickness which is within the range of between 80% and 120% of the lug length (LN) or groove depth (TN).

3. Articulated chain according to any one of claims 1 or 2, **characterized in that** the radial play between the at least one groove (42) and lug (41) in the labyrinth is between 0.6 and 2.25 mm.

4. Articulated chain according to any one of claims 1 to 3, **characterized in that** the corners and edges of the at least one lug (41) and/or groove (42) are each configured with identical radii or chamfering, at least, however, approximately identical radii or chamfering.

5. Articulated chain according to any one of claims 1 to 4, **characterized in that** the labyrinth seal is designed to be undercut, in particular **in that** the at least one groove (42) and lug (41) are designed as a dovetail.

6. Articulated chain according to any one of claims 1 to 5, **characterized in that** the offset portion has a portion center line (13) parallel to the chain center (KM), wherein, in the case of a chain under tensile force, the transmission of force between bush (3) and pin (4) is concentrated at a force transmission point (11), wherein the portion center line (13) passes through the force transmission point (11) or the portion center line (13) passes approximately through the force transmission point (11).

7. Articulated chain according to any one of claims 1 to 6, **characterized in that** the outer tab and/or the inner tab is designed in a tapered manner.

8. Articulated chain according to any one of claims 1 to 7, **characterized in that** the inner tab (1) and/or the outer tab (2) is provided with at least one reinforcement (31), wherein two reinforcements (31, 31a, 31b, 31c), which are spaced from one another and from the longitudinal axis (L) of the inner tab (1) and/or of the outer tab (2), are arranged on each of the tab heads (LK1, LK2) of the inner tab (1) and/or the outer tab (2).

9. Articulated chain according to any one of claims 1 to 8, **characterized in that**
- the inner tab (1) and/or the outer tab (2) each have at least two bores (5, 5a) in the region of the tabs heads for receiving the bush (3) or the pin (4), wherein
- the inner tab (1) and/or the outer tab (2) each have a tab longitudinal axis (L), wherein
- the inner tab (1) and/or the outer tab (2) each have a tab center axis (LM) which is arranged, preferably centrally, between the bores (5, 5a) and is aligned perpendicular to the tab longitudinal axis (L), wherein
- the inner tab (1) and/or the outer tab (2) each have bore center axes (BM1, BM2) which pass through the center (B1 or B2) of the bores (5, 5a) and are aligned perpendicular to the tab longitudinal axis (L), wherein
- the bore center axes (BM1, BM2) each delimit a first tab head (LK1) and a second tab head (LK2) from the interior region (IL) of the tab, wherein
- the tab longitudinal axis (L) divides the first tab head (LK1) into a first tab head segment (S1) and a second tab head segment (S2) and the tab longitudinal axis (L) divides the second tab head (LK1) into a third tab head segment (S3) and a fourth tab head segment (S4), wherein
- the tab head segments (S1, S2, S3, S4) each have a bore wall cross-section (BMQ1BMQ₁, BMQ₂BMQ2 BMQ₃, BMQ3, BMQ4 BMQ₄), through which they are connected to the interior region (IL) of the tab, through which the respective bore center axis (BM1BM₁ or BM2 BM₂) passes.

10. Articulated chain according to any one of claims 8 or 9, **characterized in that** the reinforcement (31 or 31a to 31c) is arranged in or on the tab, in particular in or on the tab head, preferably in or on the tab head segment within the range of an angle a of between 20° and 50°, further preferably B₂within the range of between 25° and 40°, relative to the longitudinal axis L of the tab and the center point B₁(B1 or B2) of the bore (5 or 5a).

11. Articulated chain according to any one of claims 8 to 10, **characterized in that** the reinforcement (31, 31a, 31b, 31c) is designed as a thickening of the inner tab (1) and/or outer tab, in particular of the tab head (LK1, LK2), preferably of the tab head segment (S1, S2, S3, S4).

12. Articulated chain according to any one of claims 8 to 11, **characterized in that** the cross-section of the reinforcement (Qrx), in each case proceeding radially from the respective bore center point B, is between 5% and 25%, preferably between 10% and 18%, greater than the bore wall cross-section (BMQx) of the respectively reinforced tab head segment.

13. Articulated chain according to any one of claims 1 to 12, **characterized in that** the cross-section perpendicular to the longitudinal axis (L) of the at least one inner tab (1) and/or of the at least one outer tab (2) deviate by less than 20%, preferably by less than 10%, from one another, along the longitudinal axis (L) of the tab, further preferably are identical.

14. Articulated chain according to claim 13, **characterized in that** the cross-section is adjusted as a result of tapering (51) and/or recesses (52) of the at least one inner tab (1) and/or the at least one outer tab (2).

## Revendications

1. Chaîne articulée, comprenant au moins
- une patte intérieure (1),
- une patte extérieure (2),
- une douille (3) et un goujon (4) qui forment une articulation de chaîne,
dans laquelle un joint labyrinthe est prévu entre la patte extérieure (2) et la patte intérieure (1), joint qui comprend au moins un nez (41) et au moins une rainure (42), dans laquelle le au moins un nez (41) et la au moins une rainure (42) sont conçus dans une longueur (LN) ou une profondeur (TN) entre 10 % et 50 % de l'épaisseur de patte moyenne respective (D), de préférence dans une plage de 20 % à 40 % de l'épaisseur de patte moyenne respective (D), et dans laquelle le joint labyrinthe est conçu de sorte que, en cas de surcharge de la chaîne articulée, le flux de force à l'intérieur de la chaîne articulée est partiellement dévié par les surfaces de labyrinthe formées par le au moins un nez (41) et la au moins une rainure (42), dans laquelle la au moins une rainure (42) est formée dans la patte intérieure (1) et le au moins un nez (41) est formé au niveau de la patte extérieure (2), ou dans laquelle la au moins une rainure (42) est formée dans la patte extérieure (2) et le au moins un nez (41) est formé au niveau de la patte intérieure (1), et **caractérisée en ce que en ce que** la chaîne articulée présente un centre de chaîne (KM) s'étendant en direction longitudinale, et dans laquelle la patte extérieure (2) présente une section (12) décalée par rapport au centre de chaîne (KM), et dans laquelle la section décalée (12) est disposée dans une zone centrale de la patte extérieure (2) entre les articulations de chaîne.

2. Chaîne articulée selon la revendication 1, **caractérisée en ce que** la largeur (BN ou BU) du au moins un nez (41) et/ou de la au moins une rainure (42) est réalisée avec une épaisseur qui est dans la plage de 80 % à 120 % de la longueur de nez (LN) ou de la profondeur de rainure (TN).

3. Chaîne articulée selon l'une quelconque des revendications 1 ou 2, **caractérisée en ce que** le jeu radial entre la au moins une rainure (42) et le au moins un nez (41) dans le labyrinthe est entre 0,6 et 2,25 mm.

4. Chaîne articulée selon l'une quelconque des revendications 1 à 3, **caractérisée en ce que** les coins et les bords du au moins un nez (41) et/ou de la au moins une rainure (42) sont respectivement réalisés avec des rayons ou des chanfreins identiques, mais au moins avec des rayons ou des chanfreins approximativement identiques.

5. Chaîne articulée selon l'une quelconque des revendications 1 à 4, **caractérisée en ce que** le joint labyrinthe est conçu en contre-dépouille, en particulier **en ce que** la au moins une rainure (42) et le au moins un nez (41) sont conçus en forme de queue d'aronde.

6. Chaîne articulée selon l'une quelconque des revendications 1 à 5, **caractérisée en ce que** la section décalée présente une ligne médiane de section (13) parallèle au centre de chaîne (KM), dans laquelle la transmission de force entre la douille (3) et le goujon (4) se concentrent en un point de transmission de force (11) dans le cas d'une chaîne sollicitée au moyen d'une force de traction, dans laquelle la ligne médiane de section (13) passe par le point de transmission de force (11) ou la ligne médiane de section (13) passe approximativement par le point de transmission de force (11).

7. Chaîne articulée selon l'une quelconque des revendications 1 à 6, **caractérisée en ce que** la patte extérieure et/ou la patte intérieure est réalisée de manière rétrécie.

8. Chaîne articulée selon l'une quelconque des revendications 1 à 7, **caractérisée en ce que** la patte intérieure (1) et/ou la patte extérieure (2) est équipée d'au moins un renfort (31), dans laquelle deux renforts (31, 31a, 31b, 31c) espacés l'un de l'autre et par rapport à l'axe longitudinal (L) de la patte intérieure (1) et/ou de la patte extérieure (2) sont disposés sur chacune des têtes de patte (LK1, LK2) de la patte intérieure (1) et/ou de la patte extérieure (2).

9. Chaîne articulée selon l'une quelconque des revendications 1 à 8, **caractérisée en ce que**
- la patte intérieure (1) et/ou la patte extérieure (2) présentent respectivement au moins deux alésages (5, 5a) au niveau des têtes de patte pour recevoir la douille (3) ou le goujon (4), dans laquelle
- la patte intérieure (1) et/ou la patte extérieure (2) présentent respectivement un axe longitudinal de patte (L), dans laquelle
- la patte intérieure (1) et/ou la patte extérieure (2) présente respectivement un axe central de patte (LM) qui est disposé, de préférence centralement, entre les alésages (5, 5a) et est orienté perpendiculairement à l'axe longitudinal de patte (L), dans laquelle
- la patte intérieure (1) et/ou la patte extérieure (2) présentent respectivement des axes centraux d'alésage (BM1, BM2) qui passent par le centre (B1 ou B2) des alésages (5, 5a) et sont orientés perpendiculairement à l'axe longitudinal de patte (L), dans laquelle
- les axes centraux d'alésage (BM1, BM2) délimitent respectivement une première tête de patte (LK1) et une deuxième tête de patte (LK2) par rapport à la zone intérieure (IL) de la patte, dans laquelle
- l'axe longitudinal de patte (L) divise la première tête de patte (LK1) en un premier segment de tête de patte (S1) et un deuxième segment de tête de patte (S2), et l'axe longitudinal de patte (L) divise la deuxième tête de patte (LK1) en un troisième segment de tête de patte (S3) et un quatrième segment de tête de patte (S4), dans laquelle
- les segments de tête de patte (S1, S2, S3, S4) présentent respectivement une section de paroi d'alésage (BMQ₁, BMQ₂, BMQ₃, BMQ₄) par l'intermédiaire de laquelle ils sont connectés à la zone intérieure (IL) de la patte, par laquelle passe l'axe central d'alésage respectif (BM₁ ou BM₂).

10. Chaîne articulée selon l'une quelconque des revendications 8 ou 9, **caractérisée en ce que** le renfort (31 ou 31a à 31c) est disposé dans la plage d'un angle α de 20° à 50°, de préférence en outre dans la plage entre 25° et 40°, par rapport à l'axe longitudinal L de la patte et au point central (B₁ ou B₂) de l'alésage (5 ou 5a) dans ou au niveau de la patte, en particulier dans ou au niveau de la tête de patte, de préférence dans ou au niveau du segment de tête de patte.

11. Chaîne articulée selon l'une quelconque des revendications 8 à 10, **caractérisée en ce que** le renfort (31, 31a, 31, b, 31c) est réalisé comme épaississement de la patte intérieure (1) et/ou de la patte extérieure, en particulier de la tête de patte (LK1, LK2), de préférence du segment de tête de patte (S1, S2, S3, S4).

12. Chaîne articulée selon l'une quelconque des revendications 8 à 11, **caractérisée en ce que** la section transversale du renfort (Qrx), respectivement radiale à partir du point central d'alésage B respectif, est supérieure de 5 % à 25 %, de préférence de 10 % à 18 %, à la section transversale de paroi d'alésage (BMQX) du segment de tête de patte respectivement renforcé.

13. Chaîne articulée selon l'une quelconque des revendications 1 à 12, **caractérisée en ce que** la section transversale perpendiculaire à l'axe longitudinal (L) de ladite au moins une patte intérieure (1) et/ou de ladite au moins une patte extérieure (2) le long de l'axe longitudinal (L) de la patte dévie de moins de 20 %, de préférence de moins de 10 %, de préférence en outre est identique.

14. Chaîne articulée selon la revendication 13, **caractérisée en ce que** la section transversale est réglée par des rétrécissements (51) et/ou des évidements (52) de la au moins une patte intérieure (1) et/ou de la au moins une patte extérieure (2).
